Europäisches Patentamt

European Patent Office

Office européen des brevets

(19)

(11) Veröffentlichungsnummer: **0 025 981**
**B1**

(12) **EUROPÄISCHE PATENTSCHRIFT**

(45) Veröffentlichungstag der Patentschrift:
16.01.85

(51) Int. Cl.⁴: **B 65 G 47/44**

(21) Anmeldenummer: **80105599.7**

(22) Anmeldetag: **18.09.80**

(54) **Trogkettenförderer zur steilen Entladung von Schiffen und sonstigen Behältern.**

(30) Priorität: **21.09.79 CH 8563/79**

(43) Veröffentlichungstag der Anmeldung:
**01.04.81 Patentblatt 81/13**

(45) Bekanntmachung des Hinweises auf die Patenterteilung:
**16.01.85 Patentblatt 85/3**

(84) Benannte Vertragsstaaten:
**CH DE FR GB IT LI NL SE**

(56) Entgegenhaltungen:
**CH - A - 251 563**
**DE - B - 1 233 329**
**FR - A - 575 329**
**FR - A - 1 202 308**
**FR - A - 2 070 863**
**GB - A - 930 560**
**US - A - 2 100 924**
**US - A - 2 322 474**
**US - A - 2 930 477**

(73) Patentinhaber: **Gebrüder Bühler AG, CH-9240 Uzwil (CH)**

(72) Erfinder: **Spiess, Karl A., Stationsstrasse 18,
CH-9212 Arnegg (CH)**
Erfinder: **Straub, Paul, Feldholzstrasse 12a,
CH-9242 Oberuzwil (CH)**

(74) Vertreter: **Dipl.-Phys.Dr. Manitz Dipl.-Ing. Finsterwald
Dipl.-Ing. Grämkow Dipl.-Chem.Dr. Heyn
Dipl.-Phys.Rotermund, B.Sc. Morgan
Robert-Koch-Strasse 1, D-8000 München 22 (DE)**

## Beschreibung

Die Erfindung betrifft einen Trogkettenförderer zur steilen Entladung von Schiffen und sonstigen Behältern mit einem Fördertrog und einem Rücklauftrog, die sich zwischen einem Aufnahmefuss und einem Entladekopf erstrecken sowie mit einer mit unten offenen Mitnehmern versehenen Förderkette, die über ein im Entladekopf angeordnetes Rad verläuft und einen im Fördertrog angeordneten Fördertrum und einen im Rücklauftrog angeordneten Rücklauftrum bildet, wobei das zwischen den oberen Enden des Fördertroges und des Rücklauftroges abgegebene Fördergut teilweise durch Schwerkraftentleerung über abwärts gerichtete Rutschen und teilweise durch Fliehkraftentleerung durch Herabfallen zu einem Kanal geleitet wird, dessen Eintrittsöffnung sich in Richtung parallel zur Umlaufebene über den Rücklauftrog hinaus erstreckt.

Bei Trogkettenförderern ist es bereits bekannt (US-PS 2 930 477), das oben aus dem Fördertrog austretende Material in eine auch innerhalb der Umlaufebene liegende Eintrittsöffnung eines Kanals eintreten zu lassen. Neben der Umlaufebene vorgesehene Rutschen sorgen dafür, dass auch das seitlich herabfallende Material in die Eintrittsöffnung befördert wird. Dieser bekannte Trogkettenförderer kann jedoch nicht mit einer hohen Fördergeschwindigkeit arbeiten, weil dann zuviel Material in den Rücklauftrog geschleudert werden würde und so ein zweitesmal hochgefördert werden müsste.

Bei einem bekannten Gurttaschenförderer (DE-AS 1 233 329) fällt das zwischen dem Förder- und dem Rücklauftrog abgeworfene Fördergut auf ein Förderband, welches das Fördergut seitlich aus der Umlaufebene zu einer Rutsche und einem Förderband führt. Auch bei diesem bekannten Förderer besteht im Falle einer hohen Fördergeschwindigkeit die Gefahr, dass abgeschleudertes Material teilweise in den Rücklauftrog gelangt, ganz abgesehen davon, dass das Erfordernis eines besonderen Förderers zwischen den beiden Trögen einen erhöhten Aufwand darstellt.

Schliesslich ist auch schon die Becherwerksentleerung zwischen dem Fördertrog und dem Rücklauftrog bekannt (Stetigförderer, Teil 1, aus der Buchreihe «Fördern und Heben» von Gert Salzer, Krausskopf-Verlag, Mainz 1964, S. 29, 31), wobei das aus den Bechern im Austragskopf entleerte Material auf eine zwischen den Trögen vorhandene Auslaufschurre fällt, die das Material seitlich aus der Umlaufebene hinausleitet. Auch bei diesem bekannten Becherförderer kann bei hohen Fördergeschwindigkeiten abgeschleudertes Gut in den Rücklauftrog gelangen. Weiter wird durch das Erfordernis einer Auslaufschurre zum Herausführen des Fördergutes aus dem Raum zwischen den Trögen ein gewisser Bruchteil der erreichten Förderhöhe nicht ausgenutzt.

Bei einem Trogkettenförderer der eingangs genannten Gattung (FR-A-2 070 863) werden bereits die im Falle hoher Fördergeschwindigkeit abgeschleuderten Materialmengen ebenso wie die von den Mitnehmern herunterfallenden Materialanteile teilweise durch Fliehkraftentleerung und teils durch Schwerkraftentleerung über Rutschen zu einem gemeinsamen Kanal mit einer Eintrittsöffnung geleitet. Der Kanal und die Eintrittsöffnung sind jedoch hauptsächlich in der Umlaufebene in Ausrichtung mit den beiden Trögen angeordnet, so dass das insbesondere im Bereich des Fördertroges von den Mitnehmern herunterfallende Material durch in erster Linie seitlich der Umlaufebene angeordnete Rutschen bis zu der hinter dem Rücklauftrog liegenden Eintrittsöffnung befördert werden muss. Hierbei geht ein erheblicher Teil der erreichten Förderhöhe wieder verloren, und zwar insbesondere dann, wenn bei um eine senkrecht auf der Umlaufebene stehende Achse schwenkbaren Trogkettenförderern die Rutschen relativ steil angestellt werden müssen, damit auch noch bei den grössten vorkommenden Schwenkwinkeln eine ausreichende, die Abfuhr des Fördergutes ermöglichende Neigung vorhanden ist.

Das Ziel der Erfindung besteht nun darin, einen Trogkettenförderer der eingangs genannten Gattung zu schaffen, mit dem eine möglichst grosse Förderhöhe bei sonst gleichen Gesamtabmessungen erreicht wird.

Zur Lösung dieser Aufgabe sieht die Erfindung vor, dass bei Ausbildung der Mitnehmer als Bügel die Eintrittsöffnung sich seitlich der Umlaufebene angrenzend an den Rücklauftrog und den Fördertrog erstreckt und in Höhe des oberen Randes der der Eintrittsöffnung zugekehrten Wand des Fördertroges liegt und dass auf der vom Fördertrog abgewandten Seite des Rücklauftroges eine das abgeschleuderte Material aus der Umlaufebene seitlich in den sich über den Rücklauftrog hinaus erstreckenden Teil der Eintrittsöffnung lenkende weitere Rutsche vorgesehen ist.

Aufgrund dieser Ausbildung befindet sich die Eintrittsöffnung im Bereich der Förderhöhe des Fördertroges, so dass von der einmal erreichten Förderhöhe nichts vergeben wird. Gleichwohl gelangen aber auch die durch Fliehkraft abgeschleuderten Materialmengen in die gleiche Eintrittsöffnung, wobei der Umstand ausgenutzt wird, dass das abgeschleuderte Material innerhalb des Entladekopfes grössere Höhen als das übergelaufene Material erreicht. Für das abgeschleuderte Material kann so die neben dem Rücklauftrog angeordnete, sich von der Eintrittsöffnung nach oben erstreckende weitere Rutsche vorgesehen werden. Auf diese Weise wird trotz des Einleitens sowohl des übergelaufenen als auch des abgeschleuderten Materials in ein und dieselbe, ausserhalb der Umlaufebene liegende Eintrittsöffnung bei gleichen Gesamtabmessungen die grösstmögliche Förderhöhe erreicht. Hierzu sind keine baulich aufwendigen Massnahmen sondern lediglich die Anordnung der Eintrittsöffnung und einer weiteren Rutsche an geeigneter Stelle erforderlich.

Bevorzugt verjüngt sich der Kanal in Strömungsrichtung, wodurch das in die Eintrittsöffnung eintretende Material in einem engeren Querschnitt zusammengefasst wird.

Eine bevorzugte Weiterbildung der Erfindung kennzeichnet sich dadurch, dass die weitere Rutsche durch eine Trennwand vom Rücklauftrum getrennt ist. Hierdurch wird der in den Rücklauftrog gelangende Bruchteil des Fördergutes weiter herabgesetzt.

Eine weitere Ausführungsform ist so ausgebildet, dass zwischen dem Rücklauftrum und der zwischen dem Fördertrum und dem Rücklauftrum angeordneten, das aus dem Fördertrog auf der dem Rücklauftrog zugewandten Seite austretende Material zur Eintrittsöffnung leitenden Rutsche eine Trennwand angeordnet ist. Auch durch diese Massnahme wird der in unerwünschter Weise in den Rücklauftrog gelangende Bruchteil des Fördergutes weiter herabgesetzt.

Schliesslich ist es zweckmässig, wenn die auf der von der Eintrittsöffnung abgewandten Seite der Tröge vorhandene Rückwand bis nahe an die Bügel heranreicht. Aufgrund dieser Ausbildung wird eine minimale Bautiefe erzielt; gleichwohl kann das aus dem Fördertrog austretende Fördergut nach drei Seiten abfliessen.

Die Erfindung wird im folgenden beispielsweise anhand der Zeichnung beschrieben; in dieser zeigt:

Fig. 1 eine Seitenansicht eines Trogkettenförderers,

Fig. 2 eine teilweise geschnittene Seitenansicht des Oberteils des gleichen Trogkettenförderers in vergrössertem Massstab,

Fig. 3 einen Schnitt nach Linie III–III in Fig. 2 ohne die Förderkette und die daran angeordneten Bügel,

Fig. 4 einen Schnitt durch den Rücklauftrog nach der Linie IV–IV in Fig. 2 in vergrössertem Massstab,

Fig. 5 einen Schnitt entlang der Linie V–V in Fig. 2 und

Fig. 6 einen Schnitt entlang der Linie VI–VI in Fig. 2.

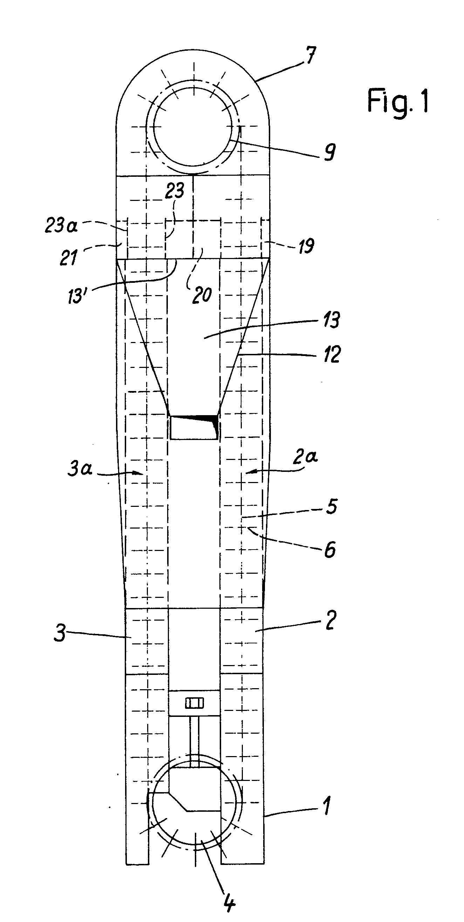

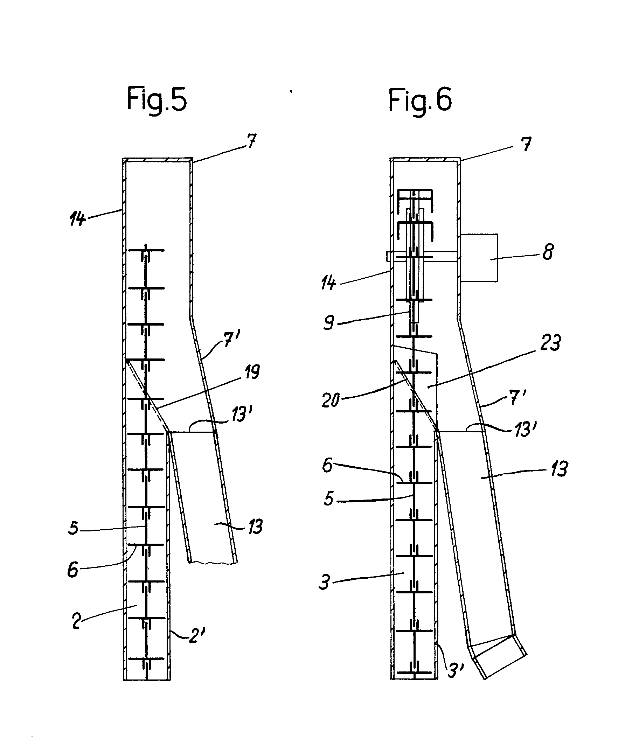

Fig. 1 zeigt einen Trogkettenförderer mit einem Fördertrog 2 und einem Rücklauftrog 3, die sich zwischen einem Aufnahmefuss 1 und einem Entladekopf 7 erstrecken. Eine mit als Bügel 6 ausgebildeten Mitnehmern versehene und im Betrieb kontinuierlich umlaufende Förderkette 5 ist über ein im Entladekopf 7 angeordnetes, von einem Motor 8 (Fig. 6) angetriebenes Antriebskettenrad 9 und ein im Aufnahmefuss 1 gelagertes Umlenkkettenrad 4 geführt. Die Förderkette 5 mit den daran in gleichen Abständen angeordneten Bügeln 6 bildet einen innerhalb des Fördertroges 2 verlaufenden Fördertrum 2a und einen innerhalb des Rücklauftroges 3 verlaufenden Rücklauftrum 2a. Das von den Bügeln 6 geförderte Produkt wird dabei vom Aufnahmefuss 1 zum Entladekopf 7 geführt.

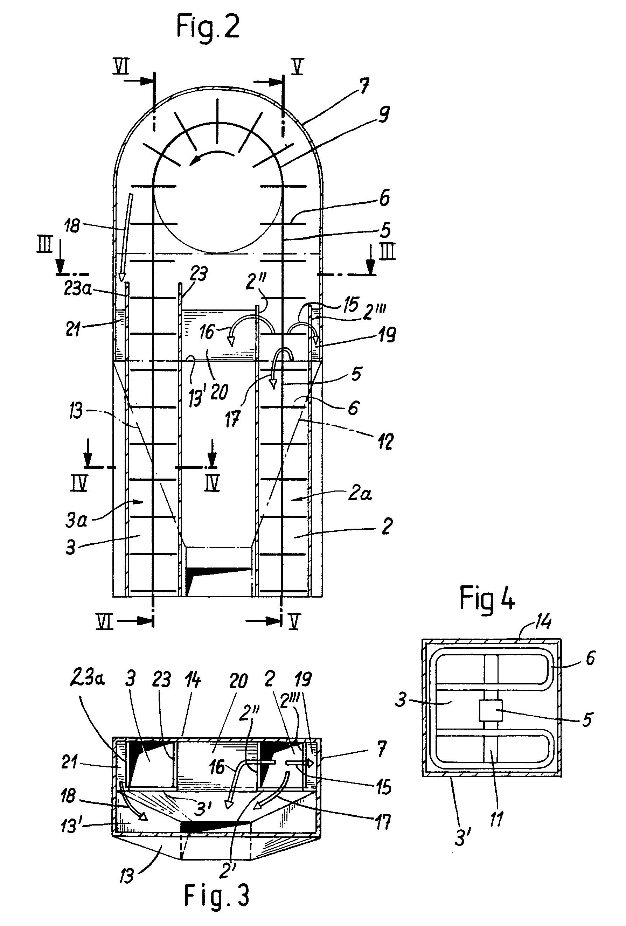

In den Fig. 2 bis 6 sind nur die oberen Bereiche des Trogkettenförderers gezeigt. Der Entladekopf 7 ist als über das Antriebsrad 9 gestülpter, auf die Tröge 2, 3 aufgesetzter Austragskasten ausgebildet, der gemäss Fig. 5, 6 über die Vorderwände 2', 3' der Tröge 2, 3 vorsteht und am oberen Rand der Vorderwände 2', 3' über ein schräges Übergangsstück 7' an die rechteckige Eintrittsöffnung 13' eines sich trichterförmig nach unten verjüngenden Kanals 13 anschliesst.

Oberhalb des Fördertroges 2 laufen die Bügel 6 unmittelbar an der Rückwand 14 des Entladekopfs 7 entlang. An den übrigen drei Seiten hingegen sind die Bügel 6 nicht von Wänden begrenzt, so dass das Fördergut von den Bügeln 6 auf drei Seiten herunterfallen und längs drei Strömungsbahnen 15, 16, 17 (Fig. 2, 3) in die Eintrittsöffnung 13' des Kanals 13 eintreten kann.

Während das Fördergut über den oberen Rand der Vorderwand 2' des Fördertroges 2 unmittelbar in die dort angrenzende Eintrittsöffnung 13' hineinfällt, strömt das über die quer zur Umlaufebene angeordneten, gegenüberliegenden Seitenwände 2'', 2''' tretende Fördergut entlang der Strömungsbahnen 15, 16 auf schräge Rutschen 19, 20, die sich von der Rückwand 14 schräg nach unten aus der Umlaufebene heraus bis zum Rand der Eintrittsöffnung 13' erstrecken.

Am Übergang des Austragskopfes 7 in den Rücklauftrog 3 ist zwischen dem Rücklauftrog 3 und der vom Fördertrog 2 abgewandten Wand des Entladekopfes 7 eine weitere Rutsche 21 vorgesehen, die sich vom in Fig. 2, 3 linken Ende der Eintrittsöffnung 13' schräg nach oben zur Rückwand 14 erstreckt.

Während die Seitenwände 2'', 2''' des Fördertroges oben gemäss den Fig. 5, 6 im Bereich der Rutschen 19 bzw. 20 entsprechend deren Neigung vom oberen Rand der Vorderwand 2' schräg aufwärts bis zur Rückwand 14 verlaufen, sind zwischen dem Rücklauftrog 3 und den Rutschen 20, 21 Trennwände 23 bzw. 23a vorgesehen, die sich nach Fig. 6 deutlich über die Rutschen 20, 21 hinaus erstrecken und so ein Übertreten von Fördergut von den Rutschen 20, 21 in den Rücklauftrog 3 verhindern.

Das aus dem Fördertrog 2 austretende Fördergut fliesst entlang der Strömungsbahnen 15, 16, 17 teils unmittelbar, teils über die Rutschen 19, 20 in die Eintrittsöffnung 13'. Nach aussen geschleudertes Fördergut gelangt über die weitere Rutsche 21 entlang der Strömungsbahn 18 (Fig. 2, 3) in die gleiche Eintrittsöffnung 13'.

Nach Fig. 4, 5 und 6 sind die Bügel 6 zentral an der Förderkette 5 angeordnet. Von der Förderkette 5 erstrecken sich zu den Bügeln 6 Querstege 11.

Die Arbeitsweise des beschriebenen Trogkettenförderers ist wie folgt:

Durch Antrieb des Kettenrades 9 läuft die Förderkette 5 mit den Bügeln 6 in Richtung des Pfeiles in Fig. 2 um. Unten vom Aufnahmefuss 1 (Fig. 1) aufgenommenes fluides Fördergut wird nun innerhalb des Fördertroges 2 als kontinuierliche Säule nach oben gefördert. Nach dem Erreichen des oberen Randes der Vorderwand 2' fällt das Fördergut entlang der Strömungsbahn 17 durch Schwerkraft unmittelbar in die Eintrittsöffnung 13' des trichterförmigen Kanals 13. Ausserdem gelangt das Fördergut über die schräg nach hinten spitz zulaufenden Seitenwände 2'' und 2''' auf die daneben angeordneten Rutschen 19, 20, welche auch dieses Material in die Eintrittsöffnung 13' führen.

Das aufgrund hoher Fördergeschwindigkeit abgeschleuderte Material gelangt durch den Austragskopf 7 hindurch entlang der Strömungsbahn 18 hinter die Trennwand 23a auf die weitere Rutsche 21, welche auch dieses Material in die Eintrittsöffnung 13' leitet. Sowohl das durch Schwerkraft als auch das durch Fliehkraft von der Förderkette 5 und den Bügeln 6 getrennte Fördergut gelangt also ohne Höhenverlust in die Eintrittsöffnung 13', von wo aus es denn im anschliessenden Kanal 13 ausserhalb der eigentlichen Hochfördermittel weiterbefördert werden kann.

## Patentansprüche

1. Trogkettenförderer zur steilen Entladung von Schiffen und sonstigen Behältern mit einem Fördertrog (2) und einem Rücklauftrog (3), die sich zwischen einem Aufnahmefuss (1) und einem Entladekopf (7) erstrecken sowie mit einer mit unten offenen Mitnehmern (6) versehenen Förderkette (5), die über ein im Entladekopf (7) angeordnetes Rad verläuft und einen im Fördertrog (2) angeordneten Fördertrum (2a) und einen im Rücklauftrog (3) angeordneten Rücklauftrum (3a) bildet, wobei das zwischen den oberen Enden des Fördertroges (2) und das Rücklauftroges (3) abgegebene Fördergut teilweise durch Schwerkraftentleerung über abwärts gerichtete Rutschen (19, 20) und teilweise durch Fliehkraftentleerung durch Herabfallen zu einem Kanal (13) geleitet wird, dessen Eintrittsöffnung (13) sich in Richtung parallel zur Umlaufebene über den Rücklauftrog (3) hinaus erstreckt, dadurch gekennzeichnet, dass bei Ausbildung der Mitnehmer als Bügel (6) die Eintrittsöffnung (13') sich seitlich der Umlaufebene angrenzend an den Rücklauftrog (3) und den Fördertrog (2) erstreckt und in Höhe des oberen Randes der der Eintrittsöffnung (13') zugekehrten Wand (2') des Fördertroges (2) liegt und dass auf der vom Fördertrog (2) abgewandten Seite des Rücklauftroges (3) eine das abgeschleuderte Material aus der Umlaufebene seitlich in den sich über den Rücklauftrog (3) hinaus erstreckenden Teil der Eintrittsöffnung (13') lenkende weitere Rutsche (21) vorgesehen ist.

2. Trogkettenförderer nach Anspruch 1, dadurch gekennzeichnet, dass der Kanal (13) sich in Strömungsrichtung verjüngt.

3. Trogkettenförderer nach Anspruch 1 oder 2, dadurch gekennzeichnet, dass die weitere Rutsche (21) durch eine Trennwand (23a) vom Rücklauftrum (3a) getrennt ist.

4. Trogkettenförderer nach einem der vorhergehenden Ansprüche, dadurch gekennzeichnet, dass zwischen dem Rücklauftrum (3a) und der zwischen dem Fördertrum (2a) und dem Rücklauftrum (3a) angeordneten, das aus dem Fördertrog (2) auf der dem Rücklauftrog (3) zugewandten Seite austretende Material zur Eintrittsöffnung (13') leitenden Rutsche (20) eine Trennwand (23) angeordnet ist.

5. Trogkettenförderer nach einem der vorhergehenden Ansprüche, dadurch gekennzeichnet, dass die auf der von der Eintrittsöffnung (13') abgewandten Seite der Tröge (2, 3) vorhandene Rückwand (14) bis nahe an die Bügel (6) heranreicht.

## Claims

1. A flight conveyor for the steep unloading of ships and other containers, the conveyor comprising a conveyor casing (2) and a return casing (3) which extend between a take-up foot (1) and a discharge head (7), and also a conveyor chain (5) which has flights (6) which are open at the bottom, which runs over a wheel arranged in the discharge head (7) and which forms a conveyor run (2a) arranged in the conveyor casing (2) and a return run (3a) arranged in the return casing (3), wherein the conveyed material discharged between the upper ends of the conveyor casing (2) and the return casing (3) is directed to a duct (13) by falling, partly by gravity emptying via downwardly directed slides (19, 20) and partly by centrifugal emptying, with the entry opening (13) of the duct extending beyond the return casing (3) in the direction parallel to the plane of circulation, characterized in that, with the flights constructed as skeletons (6), the entry opening (13') extends laterally of the plane of circulation adjacent to the return casing (3) and the conveyor casing (2) and at the level of the upper edge of the wall (2') of the conveyor casing (2) which faces the entry opening (13'); and in that a further slide (21) is provided at the side of the return casing (3) remote from the conveyor casing (2), with the further slide (21) directing the material which is spun-off out of the plane of circulation laterally into the part of the entry opening (13') which extends beyond the return casing (3).

2. A flight conveyor in accordance with claim 1, characterized in that the duct (13) tappers in the direction of flow.

3. A flight conveyor in accordance with claim 1 or claim 2, characterized in that the further slide (21) is separated from the return run (3a) by a separating wall (23a).

4. A flight conveyor in accordance with one of the preceding claims, characterized in that a separating wall (23) is arranged between the return run (3a) and the slide (20) which is arranged between the conveyor run (2a) and the return run (3a) and which leads the material leaving the conveyor casing (2) at the side facing the return casing (3) to the entry opening (13').

5. A flight conveyor in accordance with one of the preceding claims, characterized in that the rear wall (14) present at the side of the casings (2, 3) remote from the entry opening (13') extends closely up to the skeletons (6).

## Revendications

1. Transporteur à chaîne à auges pour déchargement incliné de vaisseaux et autres conteneurs, comprenant une auge de transport (2) et une auge de retour (3) qui s'étendent entre un pied de réception (1) et une tête de déchargement (7), ainsi qu'une chaîne transporteuse (5) munie d'éléments d'entraînement (6) ouverts vers le bas et qui s'étend sur une roue disposée dans la tête de déchargement (7) et forme un compartiment de transport (2a), disposé dans l'auge de transport (2), et un compartiment de retour (3a), disposé dans l'auge de retour (3), le produit transporté, délivré entre les extrémités supérieures de l'auge de transport (2) et de l'auge de retour (3), étant alors guidé partiellement par vidage par gravité sur des goulottes (19, 20) dirigées vers le bas et partiellement par vidage par force centrifuge, par chute vers un canal (13) dont l'ouverture d'entrée (13') s'étend dans une direction parallèle au plan de circulation au-delà de l'auge de retour (3), transporteur caractérisé en ce que lors de la réalisation des éléments d'entraînement en tant qu'étriers (6), l'ouverture d'entrée (13') s'étend latéralement par rapport au plan de circulation, au voisinage de l'auge de retour (3) et de l'auge de transport (2), et se trouve à la hauteur de l'arête supérieure de la paroi (2') de l'auge de transport (2), tournée vers l'ouverture d'entrée (13'), et en ce que sur le côté, tourné à l'opposé de l'auge de transport (2), de l'auge de retour (3), on prévoit une autre goulotte (21) dirigeant la matière projetée, du plan de circulation latéralement dans la partie de l'ouverture d'entrée (13') s'étendant au-delà de l'auge de retour (3).

2. Transporteur à chaîne à auges selon la revendication 1, caractérisé en ce que le canal (13) se rétrécit dans la direction d'écoulement.

3. Transporteur à chaîne à auges selon la revendication 1 ou la revendication 2, caractérisé en ce que l'autre goulotte (21) est séparée du compartiment de retour (3a) par une paroi séparatrice (23a).

4. Transporteur à chaîne à auges selon l'une des revendications précédentes, caractérisé en ce qu'on dispose une paroi de séparation (23) entre le compartiment de retour (3a) et la goulotte (20), disposée entre le compartiment de transport (2a) et le compartiment de retour (3a), et conduisant vers l'orifice d'entrée (13') la matière sortant de l'auge de transport (2) du côté tourné vers l'auge de retour (3).

5. Transporteur à chaîne à auges selon l'une des revendications précédentes, caractérisé en ce que la paroi arrière (14), présente sur le côté des auges (2, 3) tourné à l'opposé de l'ouverture d'entrée (13'), parvient jusque près des étriers (6).

Fig. 1

# Fig. 2

# Fig 4

# Fig. 3

# Fig.5

# Fig.6